# EUROPEAN PATENT APPLICATION

(11) **EP 3 660 303 A1**
(43) Date of publication of application: **03.06.2020**
(21) Application number: 18838958.9
(22) Date of filing: 28.06.2018
(51) Int. Cl.: F03D 7/04

(54) **WIND POWER GENERATION DEVICE AND METHODS FOR CONTROLLING AND REPAIRING SAME**

(30) Priority: 28.07.2017 JP 2017146719
(71) Applicant: Hitachi, Ltd., Tokyo 100-8280 (JP)
(72) Inventor: YOSHIMURA, Masatoshi, Tokyo 100-8280 (JP); KAKUYA, Hiromu, Tokyo 100-8280 (JP)
(74) Representative: MERH-IP Matias Erny Reichl Hoffmann Patentanwälte PartG mbB
(86) International application number: PCT/JP2018/024508
(87) International publication number: WO 2019/021735

(57) **Abstract**

The present invention addresses the problem of mechanical wear and decline in generation performance. This wind power generation device is provided with: a rotor that is rotated by wind; a nacelle that rotatably supports the rotor; a tower that supports the nacelle in such a manner as to be capable of rotating in a yaw rotational direction; an adjustment device for adjusting the yaw of the nacelle on the basis of a yaw control command; and a control device that determines a yaw control command to be sent to the adjustment device. The wind power generation device is characterized in that: the control device is provided with a yaw angle calculation unit for calculating the yaw angle from the orientation of the rotor and a wind direction measured by a wind direction measurement unit, and a control command creation unit for determining the yaw control command on the basis of the yaw angle, a yaw control initiation threshold, and a yaw control termination threshold; and the initiation threshold and the termination threshold are of the same polarity, and the termination threshold is lower than the initiation threshold.

## Description

### Technical Field

The present invention relates to a wind turbine generator, methods for controlling and repairing the wind turbine generator.

### Background Art

A horizontal axis type wind turbine generator includes a yaw rotation mechanism that rotates a nacelle on which a wind turbine rotor is mounted in a vertical axis direction. When a wind direction deviation (hereinafter referred to as a yaw angle) representing a deviation angle between a rotation axis of the wind turbine rotor (hereinafter referred to as a nacelle direction) and a wind direction occurs, it is known that the wind turbine generator operates so as to eliminate the yaw angle by controlling the yaw rotation mechanism in order to prevent power generation efficiency from being lowered due to a reduction in a wind receiving area of the wind turbine rotor. Examples of these yaw control methods are described in Patent Literatures 1, 2, and 3.

### Citation List

### Patent Literature

PTL 1: JP-A-2010-106727
PTL 2: US Patent No. 9,273,668
PTL 3: US Publication No. 2014-0152013

### Summary of Invention

### Technical Problem

A wind condition representing the wind direction and a wind speed at a certain location has a fluctuation component having various cycles. Further, a characteristic of the cyclic fluctuation component varies depending on a time zone. Since a wind direction fluctuation includes these fluctuation components at random, in a general yaw control method, for example, when a yaw angle in a predetermined period exceeds a predetermined threshold value, the nacelle is yaw-rotated such that the yaw angle becomes zero.

When the yaw angle can always be maintained at zero by yaw control, a power generation amount is the largest. However, when a fluctuation speed of the wind direction is faster than an operation speed of the nacelle, it is difficult to maintain the yaw angle at zero because the wind direction fluctuates before control is completed. Further, when the yaw rotation is performed, the mechanical wear of a nacelle rotation mechanism and a brake mechanism that stops the rotation of the nacelle occurs. When the control method is used to actively reduce the yaw angle, the mechanical wear may increase.

In a method disclosed in PTL 1, especially when disturbance degree of the wind condition at a certain location is high, after the yaw angle is made to be zero by yaw turning, the wind direction fluctuation occurs in a reverse direction, and the yaw turning is repeated frequently. Therefore, not only do the number of times of yaw driving increase and the mechanical wear increase, but also the yaw angle can be reduced only for a short period of time, and the power generation performance may be lowered.

It is desirable that the number of yaw rotations can be reduced to reduce the mechanical wear, and the yaw angle can be reduced to improve the power generation amount.

### Solution to Problem

In view of the above, in the invention, "a wind turbine generator includes a rotor configured to rotate by receiving wind, a nacelle configured to rotatably support the rotor, and a tower configured to yaw-rotatably support the nacelle,
in which the nacelle is configured to start a yaw rotation in a direction that reduces a yaw angle, and end the yaw rotation before the yaw angle becomes substantially zero."

Further, in the invention, "a method for controlling a wind turbine generator includes:
calculating a yaw angle from a measured wind direction and a rotor direction of a wind turbine;
starting a yaw rotation of a nacelle of the wind turbine in a direction that reduces the yaw angle; and
ending the yaw rotation of the nacelle before the yaw angle becomes substantially zero."

Further, in the invention, "a method for repairing a wind turbine generator includes:
acquiring data measured in an environment where a wind turbine generator is disposed; performing a frequency analysis on wind direction data;
calculating a start threshold value of yaw control or an end threshold value of the yaw control based on an analysis result; and
setting the calculated threshold value in the wind turbine generator."

### Advantageous Effect

According to the invention, it is possible to provide the wind turbine generator capable of reducing the number of yaw rotations and improving the power generation performance at the same time, and methods for controlling and repairing the wind turbine generator.

### Brief Description of Drawings

[FIG. 1] FIG. 1 is a side view showing an outline configuration of a wind turbine generator according to a first embodiment of the invention.
[FIG. 2] FIG. 2 is a top view (plan view) of the wind turbine generator of FIG. 1.
[FIG. 3] FIG. 3 is a block diagram showing an outline of processing of a yaw control unit 300 mounted on a control device 9 of a wind turbine generator 1 according to the first embodiment of the invention.
[FIG. 4] FIG. 4 is a diagram showing an example of a result of a frequency analysis of stored data of a wind direction Θw.
[FIG. 5] FIG. 5 is a diagram showing an example of a result of a frequency analysis of stored data of the wind direction Θw.
[FIG. 6] FIG. 6 is a flowchart showing an outline of processing of the yaw control unit 300 according to the first embodiment.
[FIG. 7] FIG. 7 is a schematic diagram showing an effect of the yaw control unit 300 according to the first embodiment.
[FIG. 8] FIG. 8 is a block diagram showing an outline of processing of the yaw control unit 300 mounted on the control device 9 of the wind turbine generator 1 according to a third embodiment of the invention.
[FIG. 9] FIG. 9 is a diagram showing an example of characteristics for changing a start threshold value Θths and an end threshold value Θthe based on an average value Vave of a wind speed Vw.
[FIG. 10] FIG. 10 is a diagram showing an example of characteristics for changing the start threshold value Θths and the end threshold value Θthe based on the average value Vave of the wind speed Vw.
[FIG. 11] FIG. 11 is a block diagram showing an outline of processing of the yaw control unit 300 mounted on the control device 9 of the wind turbine generator 1 in a fourth embodiment of the invention.
[FIG. 12] FIG. 12 is a diagram showing feature data according to a fifth embodiment.
[FIG. 13] FIG. 13 is a block diagram showing an outline of processing of the yaw control unit 300 mounted on the control device 9 of the wind turbine generator 1 according to a second embodiment of the invention.

### Description of Embodiments

Hereinafter, embodiments of the invention will be described with reference to the drawings.

### First Embodiment

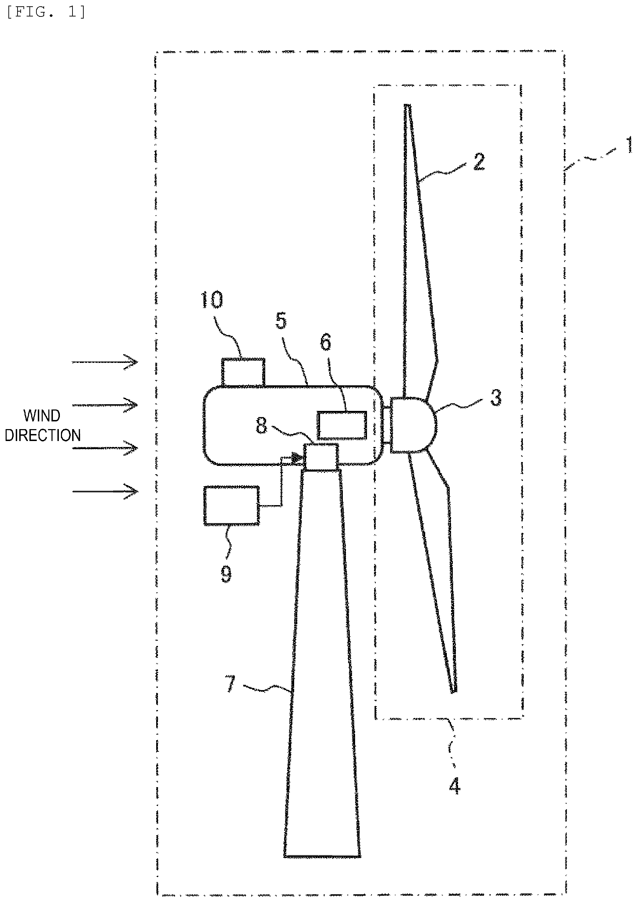

FIG. 1 is a side view showing an outline configuration of a wind turbine generator according to a first embodiment of the invention.

A wind turbine generator 1 shown in FIG. 1 includes a rotor 4 including a plurality of blades 2 and a hub 3 to which the blades 2 are connected. The rotor 4 is connected to a nacelle 5 via a rotating shaft (not shown in FIG. 1), and a position of the blade 2 can be changed by rotating. The nacelle 5 rotatably supports the rotor 4. The nacelle 5 includes an electric generator 6, and the rotor 4 rotates when the blade 2 receives wind, and a rotational force thereof can generate electric power by rotating the electric generator 6.

The nacelle 5 is disposed on a tower 7 and can be yaw-rotated in a vertical axis direction by a yaw drive mechanism 8. The control device 9 controls the yaw drive mechanism 8 based on a wind direction and a wind speed Vw detected from a wind direction and speed sensor 10 that detects the wind direction and the wind speed. The wind direction and speed sensor 10 may be a Lidar or the like, and may be attached to the wind turbine generator such as a nacelle and a tower, or may be attached to a mast or the like by a structure separated from the wind turbine generator.

The yaw drive mechanism 8 includes a yaw bearing, a yaw gear (yaw drive gear), a yaw drive motor, a yaw brake, and the like. In addition, a pitch actuator that can change an angle of the blade 2 with respect to the hub 3, a power sensor that detects an active power and a reactive power output from the electric generator 6, and the like are provided at appropriate positions.

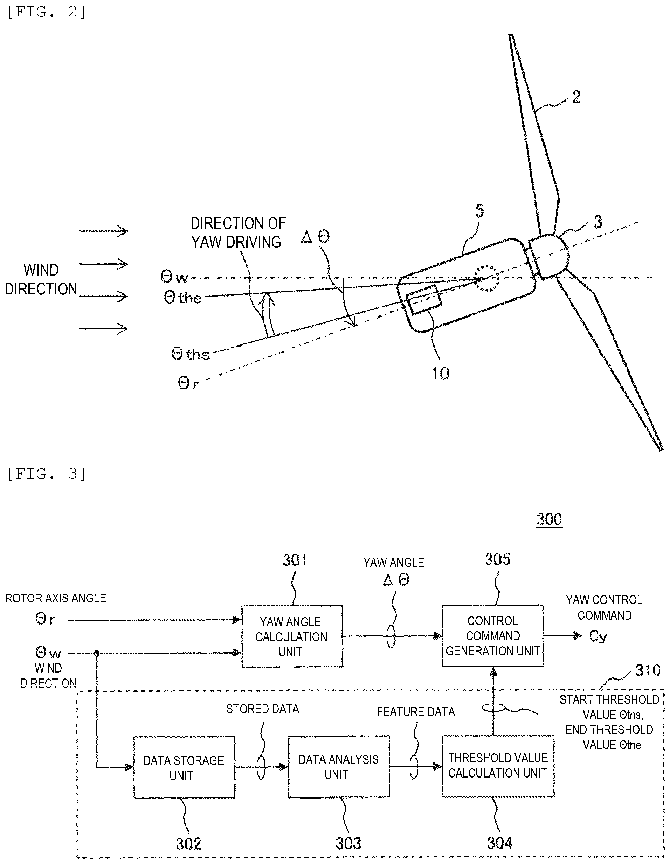

FIG. 2 is a top view (plan view) of FIG. 1. The wind direction formed in a predetermined reference direction is defined as Θw, a direction of a rotor rotation axis formed in a predetermined reference direction is defined as Θr, and a yaw angle that is a deviation angle from the wind direction Θw to an angle of the rotor rotation axis Or is defined as ΔΘ, and these relationships are illustrated. A start threshold value Θths and an end threshold value Θthe of yaw control are set with reference to, for example, the wind direction Θw as the yaw angle. The wind direction Θw may be a value acquired for each measurement cycle, an average direction in a predetermined period, and a direction calculated based on a surrounding wind condition distribution. In addition, the angle of the rotor rotation axis Or may be a direction that the rotor rotation axis faces, a direction of the nacelle, and a value measured by an encoder of a yaw drive unit, or the like.

In the invention, when the yaw angle ΔΘ is equal to or larger than the start threshold value Θths, the yaw drive mechanism 8 is started to be driven by the control device 9 and controlled until the yaw angle ΔΘ is equal to or smaller than the end threshold value Θthe. In this case, when the start threshold value Θths is a positive value, the end threshold value Θthe is a positive value smaller than the start threshold value Θths, and when the start threshold value Θths is, for example, 8 degrees, the end threshold value Θthe is 3 degrees. In other words, the start threshold value and the end threshold value have the same polarity, and the end threshold value is smaller than the start threshold value. Yaw control may simply be started or stopped at a moment when a threshold value is exceeded, or may be started or stopped when a predetermined time is exceeded, or may be started or stopped at a timing when an average of a plurality of measurement samples is taken and the timing exceeds the average.

According to the knowledge of the inventors, as will be described later, it is important to keep the end threshold value Θthe within a range where the start threshold value and the end threshold value have the same polarity (when the start threshold value is a positive value, the end threshold value is not a negative value) from a viewpoint of suppressing an increase in the mechanical wear and preventing a decrease in a power generation performance.

In implementing the invention that keeps the end threshold value Θthe within a range where the start threshold value and the end threshold value have the same polarity, it is necessary to set the end threshold value Θthe to an appropriate value. The appropriate value is determined from past experiential values in an environment of a wind power plant installation point. However, in a configuration method of the control device 9, it is conceivable that a setting value obtained by past experience or calculation in the environment of the wind power plant installation point is given as a fixed setting value and is operated offline, and a variable setting value that reflects the wind condition every moment and is calculated offline on a wind turbine or online at a remote location is given and operated. In the first embodiment, a configuration of the control device 9 that variably operates the setting value will be described. In a second embodiment, a description will be given of a case where the setting value obtained by the past experience or calculation is given as the fixed setting value and operated.

A yaw control unit 300 mounted on the control device 9 of the wind turbine generator 1 according to the first embodiment of the invention will be described with reference to FIGS. 3 to 7.

FIG. 3 is a block diagram showing an outline of processing of the yaw control unit 300 mounted on the control device 9 of the wind turbine generator 1 according to the first embodiment of the invention. The yaw control unit 300 according to the first embodiment includes a yaw angle calculation unit 301 that calculates the yaw angle ΔΘ, a threshold value calculator 310 that calculates the start threshold value Θths and the end threshold value Θthe, and a control command generation unit 305 that determines a yaw control command Cy from the yaw angle ΔΘ and the threshold values Θths and Θthe. The threshold value calculator 310 includes a data storage unit 302, a data analysis unit 303, and a threshold value calculation unit 304.

Among them, the yaw angle calculation unit 301 determines the yaw angle ΔΘ based on a rotor axis angle Or and the wind direction Θw. As shown in FIG. 2, the yaw angle ΔΘ is a difference between the wind direction Θw and the rotor axis angle Θr, and indicates how much a rotor axis is shifted from the wind direction. Here, the wind direction Θw is not limited to a value detected from the wind direction and speed sensor 10 disposed in the nacelle, and may use a value set on the ground or another place. Further, the yaw angle calculation unit 301 may use a filter (low-pass filter) that is represented by a low-pass filter and passes only a predetermined frequency region of the yaw angle ΔΘ,and a statistical value that is represented by moving average and uses an average value of values in an immediately preceding predetermined period. Alternatively, a Fourier transform may be performed.

The data storage unit 302 in the threshold value calculator 310 in FIG. 3 stores data of the wind direction Θw detected from the wind direction and speed sensor 10, and outputs the stored data of the wind direction Θw appropriately stored. In a third embodiment to-be-described later, data of the wind speed Vw is further stored, and the stored data of the wind direction Θw and the wind speed Vw that are appropriately stored is output. In the first embodiment, the stored data of the wind direction Θw is mainly used for threshold value calculation.

The data analysis unit 303 in the threshold value calculator 310 in FIG. 3 outputs feature data based on the stored data of the wind direction Θw. Here, a frequency analysis method of the stored data is used to calculate the feature data.

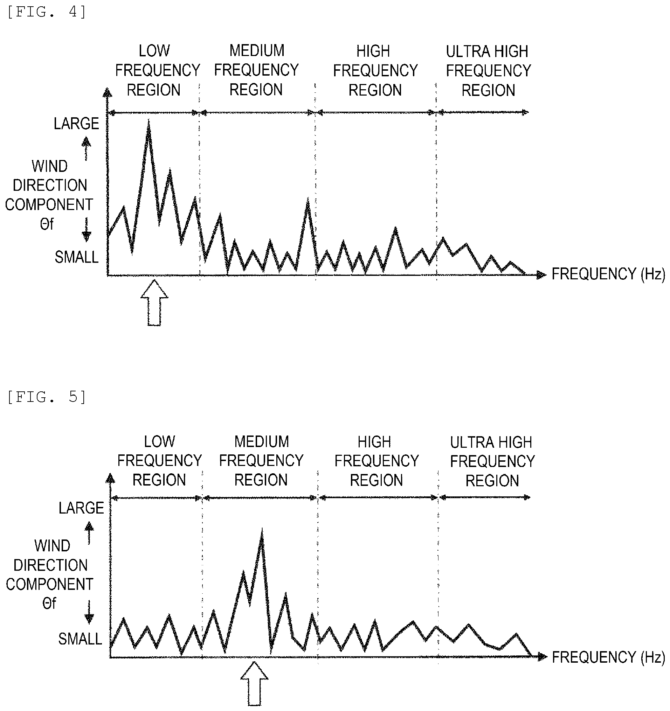

FIGS. 4 and 5 each shows an example of a result of a frequency analysis of the stored data of the wind direction Θw. A horizontal axis in FIGS. 4 and 5 shows a frequency, and a vertical axis shows a magnitude of a wind direction component Of that represents a fluctuation of the wind direction based on the frequency. For convenience, a frequency region is distinguished as a low frequency region, a medium frequency region, a high frequency region, and an ultra-high frequency region.

FIG. 4 shows an example of a frequency analysis result in a period in which there are relatively many wind direction fluctuations in a long cycle, and is characterized in that the wind direction component Of in the low frequency region shows a large value. FIG. 5 shows an example of a frequency analysis result in a period in which there are relatively many wind direction fluctuations in a cycle shorter than the cycle in FIG. 4, and is characterized in that the wind direction component Of in the medium frequency region shows a large value. Feature data of the wind condition including a frequency component in a predetermined period can be acquired by performing the frequency analysis.

Each of the low frequency region, the medium frequency region, the high frequency region, and the ultra-high frequency region may be appropriately set according to environmental circumstances of a place where each the wind turbine generator is disposed, a setting value of the filter used in the yaw angle calculation unit 301, the start threshold value Θths, the end threshold value Θthe, and the like. However, broadly speaking, the low frequency region is preferably in a range of 10⁻⁵ to 10⁻³, the medium frequency region is preferably in a range of 10⁻³ to 2 × 10⁻², the high frequency region is preferably in a range of 2 × 10⁻² to 10⁻¹, and the ultra-high frequency region is preferably in a range of 10⁻¹ to 10⁻⁰. In addition, according to another setting plan of the region, the medium frequency region is preferably in a range of 10⁻³ to 2 × 10⁻¹ because the setting of the medium frequency region is the most important.

The threshold value calculation unit 304 in the threshold value calculator 310 in FIG. 3 determines the start threshold value Θths and the end threshold value Θthe of the yaw control based on the feature data. The start threshold value Θths is a threshold value at which yaw turning is started, and the end threshold value Θthe is a threshold value at which the yaw turning is ended. In the description of the invention, in a standard state, the start threshold value Θths is set to, for example, 8 degrees and the end threshold value Θthe is set to 3 degrees, and the start threshold value Θths and the end threshold value Θthe are appropriately modified and set based on a calculation result of the feature data in the threshold value calculation unit 304.

Specifically, in the threshold value calculation unit 304, in a case of FIG. 4 where the feature data showing a tendency that the wind direction component Of in the low frequency region is large and in a case of FIG. 5 where the feature data showing a tendency that the wind direction component Of in the medium frequency region is large, the start threshold value Θths is adjusted such that the end threshold value Θthe is changed. For example, in the case of FIG. 4 where the wind direction component Of in the low frequency region is large, the start threshold value Θths is 7.5 degrees, and in the case of FIG. 5 where the wind direction component Of in the medium frequency region is large, the start threshold value Θths is 8.5 degrees. Similarly, in the case of FIG. 4 where the wind direction component Of in the low frequency region is large, the end threshold value Θthe is 2.5 degrees, and in the case of FIG. 5 where the wind direction component Of in the medium frequency region is large, the end threshold value Θthe is 3.5 degrees.

Thus, in the case of FIG. 4 where the wind direction component Of in the low frequency region is relatively large, the start threshold value Θths and the end threshold value Θthe are decreased. In addition, as shown in FIG. 5, when the wind direction component Of in the medium frequency region is relatively large, the start threshold value Θths and the end threshold value Θthe are increased.

Alternatively, for example, when the wind direction component Of in the low frequency region and the high frequency region is relatively large by combining with feature data in other frequency regions, the start threshold value Θths is increased and the end threshold value Θthe is decreased. Here, in consideration of a load applied to the wind turbine generator 1, the wind direction component Of in the high frequency region preferably does not contribute much to a determination of the start threshold value Θths and the end threshold value Θthe, or is not considered. In addition, it is preferable not to consider the wind direction component in the ultra-high frequency region that cannot be followed by the performance of the wind turbine generator 1 in determining the start threshold value Θths and the end threshold value Θthe.

In this way, in the first embodiment, the threshold value calculator 310 performs a frequency analysis on wind direction data from a wind direction measurement unit 10 to obtain a frequency component, obtains a total value of the frequency components in a predetermined frequency region for each frequency region, and generates the start threshold value and the end threshold value based on a value of the frequency component in each region.

Here, the threshold value calculation unit 304 does not have to sequentially output the start threshold value Θths and the end threshold value Θthe, and may output the start threshold value Θths and the end threshold value Θthe at any cycle or timing.

The yaw control unit 305 determines the yaw control command Cy based on the yaw angle ΔΘ, the start threshold value Θths, and the end threshold value Θthe. In a state where the yaw turning is not performed and an absolute value of the yaw angle ΔΘ is equal to or larger than the start threshold value Θths, the yaw control command Cy for starting the yaw turning is output to the yaw drive mechanism 8. Upon receiving the command, the yaw drive mechanism 8 operates such that the nacelle 5 is yaw-turned in a direction of reducing the yaw angle ΔΘ. Further, during the yaw turning, when the absolute value of the yaw angle ΔΘ falls below the end threshold value Θthe, the yaw control command Cy for stopping the yaw turning is output to the yaw drive mechanism 8.

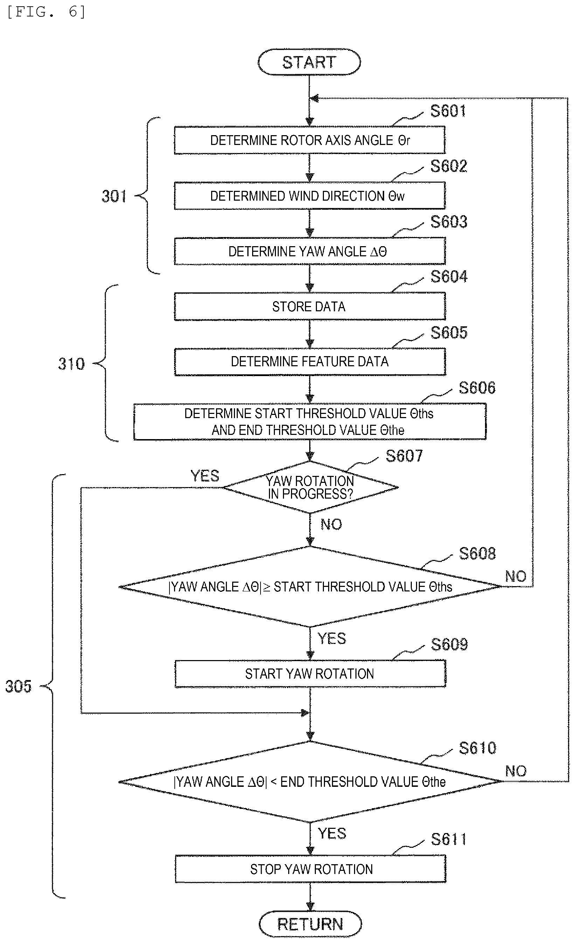

FIG. 6 is a flowchart showing an outline of processing of the yaw control unit 300 according to the first embodiment.

In processing step S601 in FIG. 6, the rotor axis angle Or is determined, and the processing proceeds to the next step. In processing step S602, the wind direction Θw is determined, and the processing proceeds to the next step. In processing step S603, the yaw angle ΔΘ is determined based on the rotor axis angle Θr and the wind direction Θw, and the processing proceeds to the next step. These processing steps S601 to S603 correspond to processing of the yaw angle calculation unit 301.

In a processing step S604 corresponding to processing of the data storage unit 302, a value of the wind direction Θw corresponding to a time is stored, and the processing proceeds to the next step. In processing step S605 corresponding to the data analysis unit 303, the feature data is determined based on the stored data, and the processing proceeds to the next step. In processing step S606 corresponding to the threshold value calculation unit 304, the start threshold value Θths and the end threshold value Θthe are determined, and the processing proceeds to the next step. These processing steps S604 to S606 correspond to processing of the threshold value calculator 310.

In processing step S607, it is determined whether the yaw turning is in progress. If NO (not in progress), the processing proceeds to processing step S608, and if YES (in progress), the processing proceeds to processing step S610. In processing step S608, it is determined whether the yaw angle ΔΘ is equal to or larger than the start threshold value Θths. If YES, the processing proceeds to processing step S609, and if NO, the processing returns to processing step S601. In processing step S609, the yaw control command Cy for starting the yaw turning is determined, and the processing proceeds to the next step. In processing step S610, the control command generation unit 305 determines whether the yaw angle ΔΘ is smaller than the end threshold value Θthe. If YES, the processing proceeds to processing step S611, and if NO, the processing returns to processing step S601. In processing step S611, after determining the yaw control command Cy for stopping the yaw turning, the series of processing ends.

These processing steps S607 to S611 correspond to processing of the control command generation unit 305. In short, in the processing, in the state that the yaw turning is not performed and the absolute value of the yaw angle ΔΘ is equal to or larger than the start threshold value Θths, the yaw control command Cy for starting the yaw turning is output to the yaw drive mechanism 8. In response to the operation, the yaw drive mechanism 8 operates such that the nacelle 5 is yaw-turned in the direction of reducing the yaw angle ΔΘ. In addition, during the yaw turning, when the absolute value of the yaw angle ΔΘ falls below the end threshold value Θthe, the yaw control command Cy for stopping the yaw turning is output to the yaw drive mechanism 8.

Next, in order to clarify an effect of the present embodiment, an outline will be described together with operation of a comparative example.

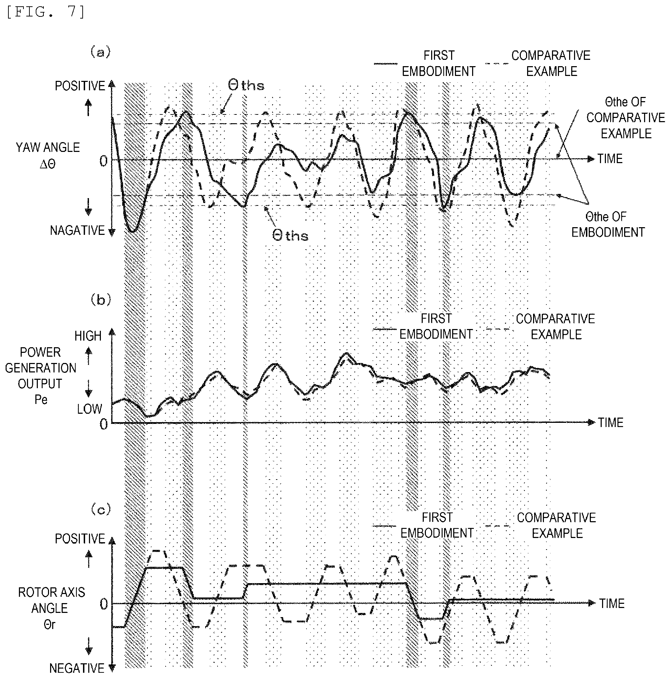

FIG. 7 is a schematic diagram showing an effect of the yaw control unit 300 according to the first embodiment, and horizontal axes all show a common time. A vertical axis in FIG. 7(a) shows the yaw angle ΔΘ, a vertical axis in FIG. 7(b) shows a power generation output Pe, and a vertical axis in FIG. 7(c) shows the rotor axis angle Θr. Each broken line shown in FIG. 7 shows a result obtained in a case where the yaw turning is ended when the yaw angle ΔΘ is zero as the comparative example when the yaw control unit 300 according to the invention is not applied. On the other hand, each solid line shows a result when the yaw control unit 300 according to the first embodiment of the invention is applied.

In calculating a comparison result of FIG. 7, as the wind condition, it was assumed that the wind direction fluctuates frequently with a certain short cycle. When a frequency analysis of the wind condition is performed, as shown in FIG. 5, the wind direction component Θf in the medium frequency region is large and the wind direction component Θf in the low frequency region is small. Therefore, the start threshold value Θths of the first embodiment is increased to some extent, and the end threshold value Θthe is close to the start threshold value Θths. The start threshold value Θths of the comparative example is set to the same value as that of the first embodiment in order to clarify the effect of the comparison.

Referring to FIG. 7 (a), the number of times that the yaw angle ΔΘ exceeds the positive and the negative start threshold value Θths is smaller in the first embodiment with the solid line than that in the comparative example with the broken line. Since the wind condition, since the wind direction fluctuates frequently with a certain short cycle, there are many patterns in which the wind direction Θw fluctuates in a reverse direction during the yaw turning, and the yaw angle ΔΘ fluctuates in the reverse direction at the end of the yaw turning. Therefore, in the first embodiment, since the yaw turning is ended before the yaw angle ΔΘ is zero, even if the yaw angle ΔΘ fluctuates in the reverse direction at the end of the yaw turning, the yaw angle ΔΘ is difficult to exceed the start threshold value Θths.

Further, since the number of times the yaw angle ΔΘ exceeds the start threshold value Θths in the first embodiment is smaller than that in the comparative example, there are more periods in which the yaw angle ΔΘ is small. In a wind turbine generator system, the power generation output Pe increases as a rotor faces the wind direction Θw, that is, as the yaw angle ΔΘ decreases. Therefore, as shown in FIG. 7(b), compared with the comparative example of the broken line, the first embodiment of the solid line has more periods in which the power generation output Pe is high. That is, the first embodiment shows that an annual power generation amount is higher than that of the comparative example.

Further, as shown in FIG. 7(c), compared with the comparative example of the broken line, the first embodiment of the solid line has fewer times and periods when the rotor axis angle Θr fluctuates, that is, a larger number of times of driving and fewer driving times of the yaw drive mechanism. The reason for the above is that the number of times that the yaw angle ΔΘ exceeds the start threshold value Θths is smaller in the first embodiment than in the comparative example and a time period during which the yaw angle ΔΘ falls below the end threshold value Θthe is shorter in the first embodiment than in the comparative example in FIG. 7(a).

As described above, according to the first embodiment, when the magnitude and the cycle of the wind direction fluctuation varies depending on a place and a time, the improvement in the power generation performance and the reduction in the mechanical wear of the wind turbine generator can be achieved at the same time.

The threshold value calculation unit can set at least one of the start threshold value and the end threshold value for each of a plurality of frequency regions, change the threshold value, and switch control depending on the wind direction. Specifically, at least one of the start threshold value and the end threshold value is generated for a plurality of predetermined frequency regions based on the frequency analysis result of the wind direction data. The control command generation unit switches and controls the start threshold value and the end threshold value of the yaw control based on the wind direction measured by a wind direction and speed measurement unit.

### Second Embodiment

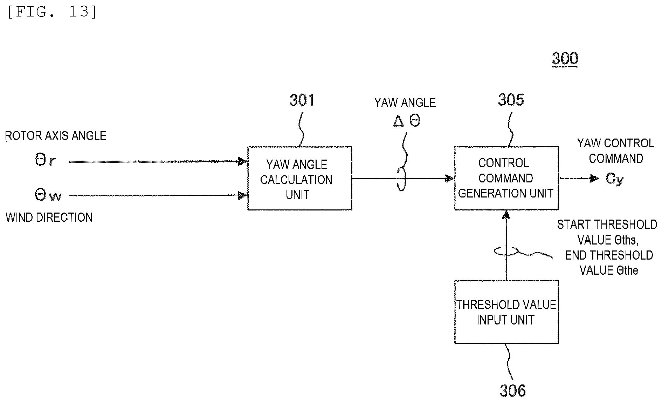

Next, the wind turbine generator 1 according to the second embodiment of the invention will be described using FIG. 13. As described above, in the second embodiment, a value obtained by past experience or calculation is set in advance in the control device 9 as a fixed setting value, and is operated offline.

In FIGS. 3 and 6 of the first embodiment, the threshold value calculator 310 calculates and updates the start threshold value Θths and the end threshold value Θthe at each control period or at the appropriate timing.

On the other hand, the yaw control unit 300 according to the second embodiment includes the yaw angle calculation unit 301 that obtains the yaw angle ΔΘ as shown in FIG. 13 and the control command generation unit 305 that determines the yaw control command Cy from the yaw angle ΔΘ, the start threshold value Θths, and the end threshold value Θthe, and does not include the threshold value calculator 310 that calculates the start threshold value Θths and the end threshold value Θthe. The start threshold value Θths and the end threshold value Θthe given to the control command generation unit 305 are preset in the yaw control unit 300, or set from the outside by a threshold value input unit 306 at an appropriate timing. The threshold value input unit 306 is an input device such as a keyboard and may be input by an operator.

A function of the threshold value calculator 310 is formed in an analysis device disposed at a place different from the wind power plant. The function calculates the start threshold value Θths and the end threshold value Θthe in a typical wind condition of the wind power plant in advance from an environmental condition obtained in, for example, a research stage and a design stage before construction of the wind power plant, and incorporates the start threshold value Θths and the end threshold value Θthe in the yaw control unit 300 as preset values. The typical wind condition may be prepared, for example, every season or every evening or morning, and may be switched and used under the appropriate condition.

Alternatively, the function of the threshold value calculator 310 is formed in the analysis device disposed at the place different from the wind power plant. The function calculates the start threshold value Θths and the end threshold value Θthe in the typical wind condition of the wind power plant from an environmental condition observed in, for example, an operation stage after disposing the wind power plant, and gives the start threshold value Θths and the end threshold value Θthe to the control command generation unit 305 in the yaw control unit 300 via the threshold value input unit 305 including a communication unit. In the case, the setting of the start threshold value Θths and the end threshold value Θthe is not in a form that responds immediately online according to the wind condition at a site, but is operated by giving a value obtained offline at an appropriate timing.

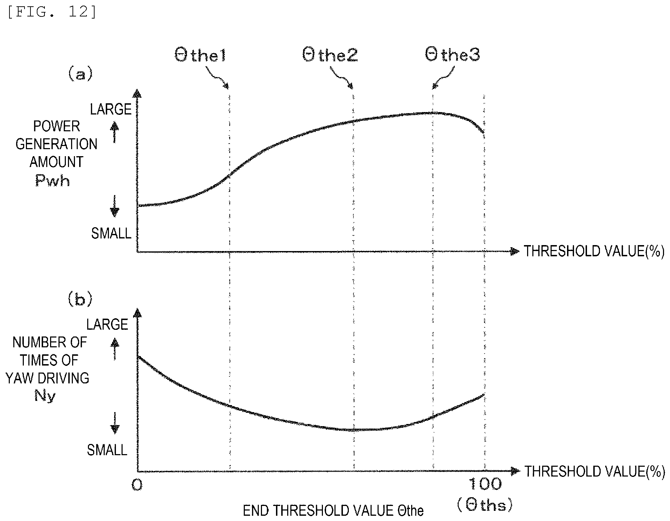

It is desirable that the end threshold value Θthe set in advance is a value mentioned in a fifth embodiment, FIG. 12, and a description thereof to-be-described later.

According to the second embodiment, there is no need to provide the analysis device in the wind turbine, and the invention can be updated by providing control of the invention without major modification to an existing wind turbine, and control based on an optimized threshold value can be performed.

### Third Embodiment

Next, the wind turbine generator 1 according to the third embodiment of the invention will be described.

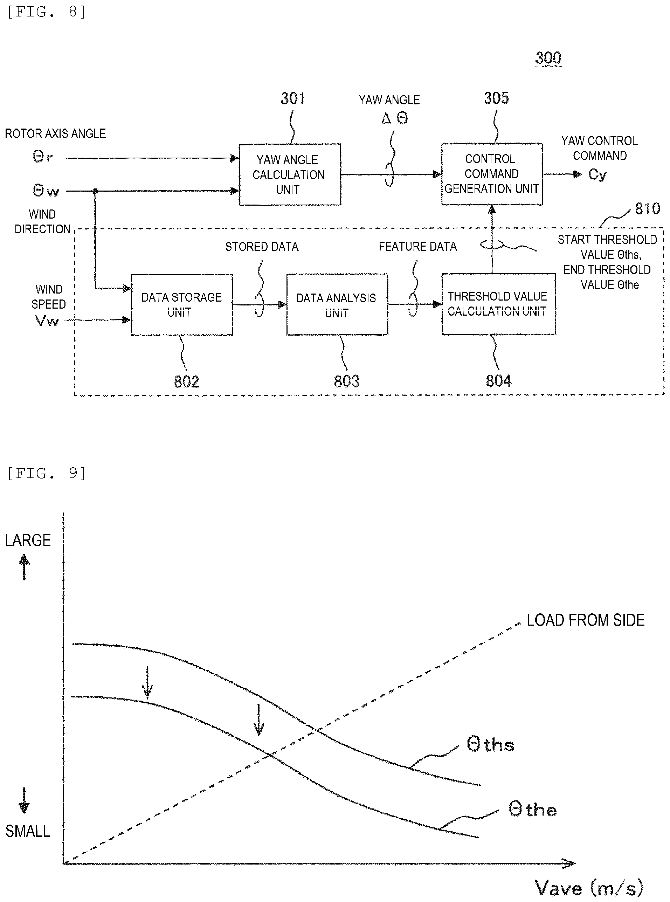

The wind power generator 1 of the third embodiment is different in that the yaw control unit 300 shown in FIG. 8 is applied instead of the yaw control unit 300 of the first embodiment.

FIG. 8 is a block diagram showing an outline of processing of the yaw control unit 300 according to the third embodiment. The yaw control unit 300 includes the yaw angle calculation unit 301 that obtains the yaw angle ΔΘ, a threshold value calculator 810 that calculates the start threshold value Θths and the end threshold value Θthe, and the control command generation unit 305 that determines the yaw control command Cy from the yaw angle ΔΘ,the start threshold value Θths, and the end threshold value Θthe. The threshold value calculator 810 includes a data storage unit 802, a data analysis unit 803, and a threshold value calculation unit 804.

In the yaw control unit 300 of the third embodiment, the yaw angle calculation unit 301 and the control command generation unit 305 have the same configuration as that of the first embodiment. However, in processing in the threshold value calculator 810, a point that the wind speed Vw is newly added to input of the data storage unit 802 in addition to the wind direction Θw is new.

The data storage unit 802 outputs the stored data of the wind direction Θw and the wind speed Vw based on the wind direction Θw and the wind speed Vw detected from the wind direction and speed sensor 10. Here, a measured wind speed Vw is detected from the wind direction and speed sensor 10 fixed to the nacelle 5, and is in a direction that the nacelle 5 faces at that time.

The data analysis unit 803 outputs the feature data based on the stored data of the wind direction Θw and the wind speed Vw. At this time, an average value Vave of the wind speed Vw in a period in which the feature data is analyzed is also output as the feature data. The wind speed Vw in this case is obtained by vector calculation in a direction that is the wind direction Θw.

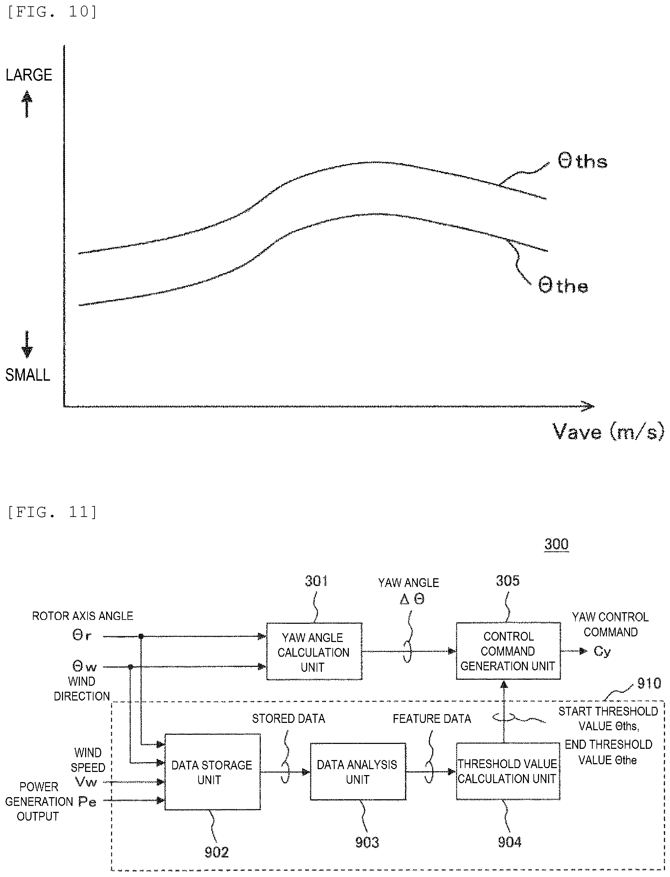

The threshold value calculation unit 804 determines the start threshold value Θths and the end threshold value Θthe of the yaw control based on the average value Vave of the wind speed Vw that is the feature data. At this time, a characteristic of changing the start threshold value Θths and the end threshold value Θthe based on the average value Vave of the wind speed Vw is provided. FIGS. 9 and 10 show an example of the characteristics of changing the start threshold value Θths and the end threshold value Θthe based on the average value Vave of the wind speed Vw.

As in a case where the medium frequency region is fast, FIG. 9 shows an example of a change characteristic of a start threshold value Θths and an end threshold value Θthe that are suitable when it is desired to reduce a load from a side of the wind turbine or increase the power generation amount at a mountain side site where wind speed fluctuation is large. In this case, the start threshold value Θths and the end threshold value Θthe are set to decrease as the average value Vave of the wind speed Vw is higher.

FIG. 10 shows an example of the change characteristic of the start threshold value Θths and the end threshold value Θthe that are suitable when it is desired to increase the power generation amount at an ocean side site where the wind speed fluctuation is small. In this case, the start threshold value Θths and the end threshold value Θthe are set to increase as the average value Vave of the wind speed Vw is higher.

These characteristics may decrease or increase stepwise, or approximate a higher-order curve of the wind speed Vw. As an example of a decrease, the following case is considered. That is, a wind speed Vwx in a range from a cut-in wind speed to a cut-out wind speed is defined, and the start threshold value Θths and the end threshold value Θthe when below the wind speed Vwx are determined to be larger than the start threshold value Θths and the second threshold value Θthe when equal to or larger than the wind speed Vwx.

According to the third embodiment, when the yaw angle ΔΘ is present, since the load applied to the wind turbine generator 1 increases as the wind speed Vw increases, it is possible to prevent an excessive load from being applied to the wind turbine generator 1 by using the characteristic of the threshold value based on the wind speed Vw of the third embodiment.

In order to cope with a case where frequency characteristics of the wind direction are different for each wind speed region, control in consideration of the wind speed of the present embodiment and control in consideration of the wind direction of the first embodiment can be performed synergistically.

For example, at least one of the start threshold value and the end threshold value may be set for each wind speed region, and control based on the frequency region of the wind direction may be changed for each wind speed. Specifically, an average wind speed in a predetermined period is obtained from the wind speed data, and based on a frequency analysis result of wind direction data in a period in which two or more different average wind speeds are obtained, at least the start threshold value or the end threshold value is generated according to the two or more different average wind speeds. Based on this, the control command generation unit can, based on the wind speed measured by a wind speed and direction measurement device, appropriately switch and control the start threshold value and the end threshold value of the yaw control.

In the control device using information of the wind speed according to the second embodiment, as a protective treatment, when the wind speed exceeds a predetermined value, it is preferable to decrease either or both of the start threshold value and the end threshold value. At this time, the predetermined value of the wind speed is preferably larger than the cut-in wind speed and smaller than the cut-out wind speed.

### Fourth Embodiment

Next, the wind turbine generator 1 according to the fourth embodiment of the invention will be described.

The wind turbine generator 1 of the fourth embodiment includes the same unit as the yaw control unit 300 of the first embodiment, but has processing different from the processing in the data analysis unit 303 and the threshold value calculation unit 304.

In the data analysis unit 303 of the fourth embodiment, based on the wind direction Θw, an average value Θave of the wind direction Θw and a standard deviation σ in a predetermined period are calculated by a statistical analysis, and are output as the feature data of the wind condition.

The threshold value calculation unit 304 determines the start threshold value Θths and the end threshold value Θthe of the yaw control based on the feature data statistically analyzed. Here, when a difference between the average value Θave statistically analyzed before a predetermined time and the average value Θave calculated immediately previously is relatively large, that is, when the change is large, the start threshold value Θths and the end threshold value Θthe are decreased.

On the other hand, when the standard deviation σ is relatively large, the start threshold value Θths and the end threshold value Θthe are increased. When the average value Θave and the standard deviation σ are relatively large, the start threshold value Θths is increased and the end threshold value Θthe is decreased.

A similar effect as that of the first embodiment can be achieved by a simpler processing by applying the processing of the yaw control unit 300 of the fourth embodiment.

### Fifth Embodiment

Next, the wind turbine generator 1 according to the fifth embodiment of the invention will be described.

The wind turbine generator 1 of the fifth embodiment is different in that the yaw control unit 300 shown in FIG. 11 is applied instead of the yaw control unit 300 of the first embodiment.

FIG. 11 is a block diagram showing an outline of processing of the yaw control unit 300 according to the fifth embodiment. The yaw control unit 300 includes the yaw angle calculation unit 301 that obtains the yaw angle ΔΘ, a threshold value calculator 910 that calculates the start threshold value Θths and the end threshold value Θthe, and the control command generation unit 305 that determines the yaw control command Cy from the yaw angle ΔΘ, the start threshold value Θths, and the end threshold value Θthe. The threshold value calculator 910 includes a data storage unit 902, a data analysis unit 903, and a threshold value calculation unit 904.

In the yaw control unit 300 of the fifth embodiment, the yaw angle calculation unit 301 and the control command generation unit 305 have the same configuration as that of the first embodiment, but in processing in the threshold value calculator 910, a point that the rotor axis angle Θr, the wind speed Vw, and the power generation output Pe are newly added to input of the data storage unit 902 in addition to the wind direction Θw is new.

The data storage unit 902 outputs stored data of the wind direction Θw, the wind speed Vw, the rotor axis angle Θr, and the power generation output Pe based on the wind direction Θw and the wind speed Vw detected from the wind direction and speed sensor 10, the rotor axis angle Θr, and the power generation output Pe.

The data analysis unit 903 outputs the feature data based on the stored data of the wind direction Θw, the wind speed Vw, the rotor axis angle Θr, and the power generation output Pe. FIG. 12 is a diagram for showing feature data in the fifth embodiment. The feature data in the fifth embodiment includes a distribution curve, as shown in FIG. 12(a), in which the horizontal axis indicates a ratio of the end threshold value Θthe to the start threshold value Θths of the yaw control and the vertical axis indicates a power generation amount Pwh, and a distribution curve, as shown in FIG. 12(b), in which the horizontal axis indicates the ratio of the end threshold value Θthe to the start threshold value Θths of the yaw control and the vertical axis indicates the number of times of the yaw driving Ny.

First, a method for generating the distribution curve shown in FIG. 12(a) will be described. A power generation amount Pwhx is calculated based on the wind speeds Vwx and the power generation outputs Pex at a start threshold value Θthsx and an end threshold value Θthex set in a predetermined period tx. Further, a power generation amount Pwhy is calculated based on wind speeds Vwy and power generation outputs Pey at different start threshold values Θthsy and end threshold values Θthey set in different predetermined periods ty. In this way, the power generation amount Pwh at a plurality of start threshold values Θths and end threshold values Θthe is calculated, and the distribution curve shown in FIG. 12(a) is generated.

According to the distribution curve shown in FIG. 12(a), the distribution curve shows that the power generation amount Pwhx tends to increase as the ratio of the end threshold value Θthe to the start threshold value Θths of the yaw control increases from 0 (%), and shows a mountain-shaped tendency in which the power generation amount Pwhx slightly increases as the ratio approaches 100 (%).

Next, a method for generating the distribution curve shown in FIG. 12(b) will be described. The number of times of the yaw driving Nyx is calculated based on a rotor axis angle Θrx at the start threshold value Θthsx and the end threshold value Θthex set in the predetermined period tx. Further, the number of times of the yaw driving Nyy is calculated based on a rotor axis angle Θry at different start threshold values Θthsy and end threshold values Θthey set in different predetermined periods ty. In this way, the number of times of the yaw driving Ny at a plurality of start threshold values Θths and end threshold values Θthe is calculated, and the distribution curve shown in FIG. 12(b) is generated.

According to the distribution curve shown in FIG. 12(b), the distribution curve shows that the number of times of the yaw driving Ny tends to decrease as the ratio of the end threshold value Θthe to the start threshold value Θths of the yaw control increases from 0 (%), and shows a valley-shaped tendency in which the number of times of the yaw driving Ny increases as the ratio approaches 100 (%).

According to the mountain-shaped distribution curve shown in FIG. 12(a) and the valley-shaped distribution curve shown in FIG. 12(b), there is a region (the ratio of the end threshold value Θthe to the start threshold value Θths of the yaw control) where the power generation amount Pwhx can be increased and the number of times of the yaw driving Ny can be decreased. The vicinity of an end threshold value Θthe2 is an area that satisfies both conditions.

The threshold value calculation unit 904 determines the start threshold value Θths and the end threshold value Θthe of the yaw control based on the distribution curve that the feature data. Based on FIGS. 12 (a) and 12 (b), the end threshold value Θthe is set to a value larger than zero with respect to the start threshold value Θths (for example, 5 degrees to 10 degrees). For example, the end threshold value Θthe is determined to be greater than or equal to a Θthe1 that is an inflection point of an improvement rate of the power generation amount Pwh, and that is less than the number of times of the yaw driving Ny when the end threshold value is zero. The Θthe1 at the inflection point corresponds to a position which is 30% of the start threshold value. Especially in an environmental condition where the wind direction fluctuation is relatively large, such as a mountainous area, when the start threshold value Θths is set to 8 degrees or more, the Θthe may be set to be equal to or larger than 2.5 degrees.

More desirably, the end threshold value Θthe is preferably determined between the end threshold value Θthe2 at which the number of times of the yaw driving Ny is the smallest and an end threshold value Θthe3 at which the power generation amount Pwh is the largest. The Θthe2 corresponds to 75% of the start threshold value. The Θthe3 corresponds to 95% of the start threshold value. Especially in the environmental condition where the wind direction fluctuation is relatively large, such as in the mountainous area, when the start threshold value Θths is set to be equal to or larger than 8 degrees, the Θthe is set to be equal to or larger than 6 degrees and equal to or smaller than 7.6 degrees to have a more balanced control between the reduction of the mechanical wear and the improvement of the power generation amount.

By performing the yaw control based on the distribution curve generated in the fifth embodiment, it is possible to know an estimated power generation amount Pwh and the number of times of the yaw driving Ny in advance with high accuracy at the start threshold value Θths and the end threshold value Θthe to be determined. Here, instead of the number of times of the yaw driving Ny, a time of the yaw driving for obtaining a similar effect or a load that can be calculated from the number of times of the yaw driving Ny may be used.

### Sixth Embodiment

Next, a method for repairing the wind turbine generator 1 according to a sixth embodiment of the invention will be described.

The sixth embodiment describes a method of applying a control method of the embodiment to the wind turbine generator 1 that is not provided with the threshold value calculator or that is controlled with a fixed value with the yaw control end threshold value being zero. First, in order to calculate an optimum threshold value, it is necessary to analyze wind speed and direction data measured in an environment where the wind turbine generator is disposed. Therefore, the wind speed and the wind direction are measured locally, or data measured by a wind speed anemometer disposed in the wind turbine is acquired, the wind speed is confirmed, the frequency of the wind direction is analyzed, and the optimum threshold value is calculated.

Next, when a threshold value input unit connected to the existing wind turbine is already disposed in a part of WTC, the wind turbine generator 1 can be repaired by setting the end threshold value of the yaw control that is smaller than the start threshold value of the yaw control and larger than zero as described in other embodiments. In addition, when the end value of the yaw control can be set via a network when connected to the network, the wind turbine generator 1 can be repaired by the threshold value input unit via the network.

In addition, when a threshold value calculator is newly disposed in order to calculate a threshold value by the threshold value calculator, a control method described in the other embodiments can be implemented by newly connecting the threshold value calculator to the control device of the wind turbine, a wind farm controller, or a server connected via the network.

The invention is not limited to the embodiment described above, and various modifications can be made. The embodiment described above is illustrated for easy understanding of the invention and is not necessarily limited to those including all the configurations described above. In addition, a part of the configuration of one embodiment can be replaced with the configuration of another embodiment, and the configuration of another embodiment can be added to the configuration of one embodiment. In addition, another configuration may be added to a part of the configuration of each embodiment, and the part of the configuration may be deleted or replaced with another the configuration. In addition, control lines and information lines shown in the drawings are considered to be necessary for description, and all control lines and information lines necessary on the product are not necessarily shown. In practice, it may be considered that almost all the configurations are connected to each other. Possible modifications to the embodiment described above are, for example, as follows.
(1) The data storage unit 302, the data analysis unit 303, and the threshold value calculation unit 304 in the yaw control unit 300 may be provided in an external device instead of the control device 9.
(2) The start threshold value Θths and the end threshold value Θthe of the yaw control calculated in the invention may be applied to another the wind turbine generator 1 at the same site or the wind turbine generator 1 at another site where the wind condition is close.
(3) The data storage unit 302 in the yaw control unit 300 may be a unit that does not sequentially input wind condition data including the wind direction Θw but stores only wind condition data stored in the past.
(4) In each of the above embodiments, the wind direction and speed sensor 10 is disposed on the nacelle. However, the wind direction and speed sensor 10 may be disposed in the nacelle 5 or around the wind turbine generator 1 instead of this place.

According to the embodiment of the invention, when the wind direction fluctuates frequently with a certain short cycle, the end threshold value of the yaw turning is brought close to the start threshold value, and the yaw turning is stopped before the yaw angle is zero, even if the wind direction fluctuation of the same degree or less occur in the reverse direction after the yaw turning, the start threshold value of the yaw turning is not exceeded. Therefore, since the number of times of the yaw driving is decreased, the mechanical wear of the wind turbine generator can be reduced. Further, since the yaw angle exceeding the start threshold value of the yaw turning is reduced and the followability to the wind direction is increased, it is possible to simultaneously improve the power generation performance.

### Reference Sign List

- 1:: wind turbine generator
- 2:: blade
- 3:: hub
- 4:: rotor
- 5:: nacelle
- 6:: electric generator
- 7:: tower
- 8:: yaw drive mechanism
- 9:: control device
- 10:: wind direction and speed sensor
- 300:: yaw control unit
- 301:: yaw angle calculation unit
- 305:: control command generation unit
- 310:: threshold value calculator
- 302, 802, 902:: data storage unit
- 303, 803, 903:: data analysis unit
- 304, 804, 904:: threshold value calculation unit

## Claims

1. A wind turbine generator, comprising:
a rotor configured to rotate by receiving wind;
a nacelle configured to rotatably support the rotor; and
a tower configured to yaw-rotatably support the nacelle,
wherein the nacelle is configured to start a yaw rotation in a direction that reduces a yaw angle, and end the yaw rotation before the yaw angle becomes substantially zero.

2. The wind turbine generator according to claim 1,
wherein the nacelle is configured to
start a yaw rotation, when a yaw angle is equal to or larger than a start threshold value of yaw control, in the direction that reduces the yaw angle, and
end the yaw rotation when the yaw angle is equal to or smaller than an end threshold value of the yaw control, and
wherein the start threshold value and the end threshold value have the same polarity, and the end threshold value is smaller than the start threshold value.

3. The wind turbine generator according to claim 2, further comprising:
an adjustment device configured to adjust yaw of the nacelle based on a yaw control command; and
a control device configured to determine the yaw control command to be sent to the adjustment device,
wherein the control device includes:
a yaw angle calculation unit configured to calculate the yaw angle from a wind direction measured by a wind direction measurement unit and a direction of the rotor; and
a control command generation unit configured to determine the yaw control command based on the yaw angle, the start threshold value of the yaw control, and the end threshold value of the yaw control, and
wherein the start threshold value and the end threshold value have the same polarity, and the end threshold value is smaller than the start threshold value.

4. The wind turbine generator according to claim 3,
wherein in the control device, the start threshold value and the end threshold value are set in advance in the control command generation unit.

5. The wind turbine generator according to claim 3,
wherein in the control device, the start threshold value and the end threshold value are set from an outside of the wind turbine generator via a communication unit.

6. The wind turbine generator according to claim 3,
wherein the control device further includes a threshold value calculator configured to obtain at least one of the start threshold value of the yaw control and the end threshold value of the yaw control.

7. The wind turbine generator according to claim 6,
wherein the threshold value calculator is configured to perform a frequency analysis on wind direction data from the wind direction measurement unit to obtain a frequency component, and generate at least one of the start threshold value and the end threshold value based on a value of the frequency component in a predetermined frequency region.

8. The wind turbine generator according to claim 7,
wherein the threshold value calculator is configured to generate at least the start threshold value or the end threshold value based on a low frequency component in the frequency component.

9. The wind turbine generator according to claim 7 or 8,
wherein the threshold value calculator is configured to apply either a low-pass filter or a Fourier transform for the frequency analysis.

10. The wind turbine generator according to any one of claims 6 to 9,
wherein the control device is configured to decrease the value of either one or both of the start threshold value and the end threshold value when a wind speed exceeds a predetermined value.

11. The wind turbine generator according to any one of claims 7 to 9,
wherein the threshold value calculator is configured to obtain an average wind speed in a predetermined period from wind speed data, and based on a frequency analysis result of the wind direction data in the period in which two or more different average wind speeds are obtained, generate at least one of the start threshold value and the end threshold value according to the two or more different average wind speeds, and
wherein the control command generation unit is configured to determine the yaw control command based on a measured wind speed, the yaw angle, the start threshold value, and the end threshold value.

12. The wind turbine generator according to any one of claims 7 to 10,
wherein the threshold value calculator is configured to generate at least one of the start threshold value and the end threshold value for a plurality of predetermined frequency regions based on the frequency analysis result of the wind direction data, and
wherein the control command generation unit is configured to determine the yaw control command based on the measured wind direction, the yaw angle, the start threshold value, and the end threshold value.

13. The wind turbine generator according to claim 6,
wherein the threshold value calculator is configured to obtain a standard deviation and an average value from wind direction data, and, based on the standard deviation, the average value, or a change in the average value, generate at least one of the start threshold value and the end threshold value.

14. The wind turbine generator according to claim 6,
wherein the threshold value calculator is configured to perform a statistical analysis based on wind direction data, wind speed data, and power generation output data during operation, obtain a distribution curve of a power generation amount for each ratio of the end threshold value to the start threshold value, and
when the ratio is zero, set the power generation amount as a reference value and set the end threshold value at the ratio at which the power generation amount is larger than the reference value, and
wherein the control command generation unit is configured to determine the yaw control command based on the yaw angle, the start threshold value of the yaw control, and the end threshold value of the yaw control.

15. The wind turbine generator according to claim 2 or 3,
wherein the end threshold value is set to 2.5 degrees or more.

16. The wind turbine generator according to claim 2 or 3,
wherein the end threshold value is set to 6 degrees or more.

17. The wind turbine generator according to claim 2 or 3,
wherein the end threshold value is set to an angle of 30% or more of the start threshold value.

18. A method for controlling a wind turbine generator, comprising:
calculating a yaw angle from a measured wind direction and a rotor direction of a wind turbine;
starting a yaw rotation of a nacelle of the wind turbine in a direction that reduces the yaw angle; and
ending the yaw rotation of the nacelle before the yaw angle becomes substantially zero.

19. The method for controlling a wind turbine generator according to claim 18, further comprising:
when the yaw angle becomes equal to or larger than a start threshold value of yaw control, starting the yaw rotation of the nacelle of the wind turbine in the direction that reduces the yaw angle; and
when the yaw angle becomes equal to or smaller than an end threshold value of the yaw control, ending the yaw rotation of the nacelle,
wherein the start threshold value and the end threshold value have the same polarity, and the end threshold value is smaller than the start threshold value.

20. The method for controlling a wind turbine generator according to claim 19, further comprising:
performing a frequency analysis on measured wind direction data to generate at least one of the start threshold value and the end threshold value for a predetermined frequency region; and
controlling by changing the start threshold value or the end threshold value based on the wind direction.

21. The method for controlling a wind turbine generator according to claim 20,
wherein the frequency region is at least a low frequency region, a medium frequency region, and a high frequency region, and
wherein regarding a value of a frequency component in the frequency region, when the value of the frequency component in the low frequency region is larger than a frequency component in other frequency regions, the start threshold value and the end threshold value are set to be smaller than those when the value of the frequency component in the medium frequency region is larger than the frequency component in other frequency regions.

22. The method for controlling a wind turbine generator according to claim 19, further comprising:
obtaining an average value of wind speeds; and
setting the start threshold value and the end threshold value to be smaller when the average value of the wind speeds is higher or when the wind speeds exceed a predetermined value.

23. The method for controlling a wind turbine generator according to claim 19, further comprising:
obtaining a standard deviation and an average value of wind direction data; and
generating the start threshold value and the end threshold value based on the standard deviation, the average value, or a change in the average value.

24. The method for controlling a wind turbine generator according to claim 19, further comprising:
performing a statistical analysis based on wind direction data, wind speed data, and power generation output data during operation;
obtaining a distribution curve of a power generation amount for each ratio of the end threshold value to the start threshold value; and
setting the power generation amount when the ratio is zero as a reference value and performing the yaw control by using the start threshold value and the end threshold value at the ratio at which the power generation amount is larger than the reference value.

25. A method for repairing a wind turbine generator which includes a rotor configured to rotate by receiving wind,
a nacelle configured to rotatably support the rotor,
and a tower configured to yaw-rotatably support the nacelle, the method comprising:
acquiring wind direction data measured in an environment where the wind turbine generator is disposed;
performing a frequency analysis on the wind direction data;
calculating a start threshold value of yaw control or an end threshold value of the yaw control of the wind turbine generator based on a result of the analysis; and
setting the calculated threshold value in the wind turbine generator.
